# EUROPÄISCHE PATENTSCHRIFT

(11) **EP 3 393 869 B1**
(45) Veröffentlichungstag und Bekanntmachung des Hinweises auf die Patenterteilung: **04.03.2020**
(21) Anmeldenummer: 16815796.4
(22) Anmeldetag: 13.12.2016
(51) Int. Cl.: B60T 8/17, B60T 8/18, B60T 8/56

(54) **BREMSSTEUERUNG FÜR SCHIENENFAHRZEUGE MIT ADAPTIVER BELAG-KENNLINIE**
BRAKING CONTROL FOR RAIL VEHICLES WITH ADAPTIVE LINING CHARACTERISTIC CURVE
COMMANDE DE FREINAGE POUR VÉHICULES FERROVIAIRES AVEC COURBE CARACTÉRISTIQUE DE GARNITURE ADAPTATIVE

(30) Priorität: 21.12.2015 DE 102015226344
(43) Veröffentlichungstag der Anmeldung: 31.10.2018
(73) Patentinhaber: KNORR-BREMSE Systeme für Schienenfahrzeuge GmbH, 80809 München (DE)
(72) Erfinder: HERDEN, Marc-Oliver, 81377 München (DE)
(86) Internationale Anmeldenummer: PCT/EP2016/080841
(87) Internationale Veröffentlichungsnummer: WO 2017/108505

(56) Entgegenhaltungen:
- WO-A1-2013/182480
- WO-A2-2009/129085
- US-A1- 2010 131 166

## Beschreibung

Die vorliegende Erfindung betrifft eine Vorrichtung und ein Verfahren zur Steuerung einer Bremseinrichtung für Schienenfahrzeuge.

Bei modernen Schienenfahrzeugen werden häufig pneumatische oder hydraulische Bremseinrichtungen verwendet, die durch elektronische Bremssteuereinrichtungen gesteuert werden. Während der Fahrzeugzulassung werden die pneumatisch oder mechanisch arbeitenden Regel- und Begrenzungsventile für den Lastdruck an die Charakteristik des Bremsbelages angepasst. Hierbei wird in der Regel ein über die Zeit gemittelter Reibwert (µ) zwischen den Bremsreibungsflächen (z.B. Bremsbelag und Bremsscheibe) verwendet, welcher charakteristisch für einen Bremsbelagtyp oder eine Bremsbelagsorte ist. Die Druckregelung wird dann so eingestellt, dass - zusätzlich über den Lastdruck kompensiert - der gewünschte Bremszylinderdruck in der Schnellbremse entsteht.

Aus der WO 2010/069520 A2 ist eine Bremsanlage eines Schienenfahrzeugs mit Kompensation geringfügiger Schwankungen der Reibbedingungen bekannt, bei dem Herstell- und Wartungsaufwand der Bremsanlage dadurch verringert wird, dass der zeitliche Verlauf wenigstens einer Schwankungen der Reibbedingungen zwischen Rad und Schiene und/oder zwischen Bremsbelag und Bremsscheibe repräsentierenden Größe, wie Raddrehgeschwindigkeit, Radumfangsbeschleunigung, Bremskraft, Bremsmoment oder Bremsdruck, mittels einer Sensoreinrichtung gemessen und die vom Bremsaktuator erzeugte Bremskraft abhängig von einer Abweichung des zeitlichen Verlaufs der gemessenen Größe von einem vorgegebenen oder erwarteten zeitlichen Verlauf der Größe angepasst wird.

In der Regel wird ein Schienenfahrzeug zusammen mit einer spezifischen Bremsbelagsorte zugelassen, die dann letztlich auch den oben erwähnten vorgegebenen zeitlichen Verlauf der die Reibbedingungsschwankungen repräsentierenden Größe bestimmt. Dies beschränkt den Betreiber bei der Auswahl möglicher Bremsbelagsorten und führt zu einem erhöhten technischen Aufwand bei einem geplanten Wechsel der Bremsbelagsorte.

Der vorliegenden Erfindung liegt daher die Aufgabe zugrunde, eine Vorrichtung und ein Verfahren zur Steuerung einer Bremseinrichtung für Schienenfahrzeuge bereitzustellen, mittels denen bei verringertem technischen Aufwand mehrere Bremsbelagsorten mit unterschiedlichen Reibcharakteristiken im Betrieb nutzen genutzt werden können;

Diese Aufgabe wird durch die Merkmale der Vorrichtung und des Verfahrens gemäß den unabhängigen Ansprüchen gelöst.

Weitere vorteilhafte Ausgestaltungen und Weiterbildungen der Erfindung ergeben sich aus den abhängigen Ansprüchen.

Erfindungsgemäß wird also die Druckkennlinie der Bremseinrichtung (z.B. des Bremsaktuators) in Abhängigkeit einer Reibcharakteristik einer in der Bremseinrichtung verwendeten Bremsbelagsorte verändert. So können bspw. zumindest zwei unterschiedliche Kennlinien vorgehalten werden, zwischen denen je nach verbautem Belagtyp bspw. im Rahmen einer Wartungsaktivität oder selbsterkennend automatisch umgeschaltet werden kann. Bei der Veränderung kann es sich bspw. um eine vertikale Verschiebung der Druck-Geschwindigkeit-Kennlinie längs der Druckachse handeln. Unabhängig von der Lastkorrektur kann die Druckkennlinie bspw. bei einer Schnellbremsung so verschoben werden, dass der unterschiedliche mittlere Reibwert (µ) der aktuell verwendeten Bremsbelagsorte einbezogen und damit ausgeglichen wird. Auf eine aufwändige Umrüstung bzw. Umprogrammierung der Bremssteuerung nach Wechsel der Bremsbelagsorte kann somit verzichtet werden.

Erfindungsgemäß ist des Weiteren eine Ermittlungseinrichtung vorgesehen zum Ermitteln der Reibcharakteristik anhand eines die gewählte Bremsbelagsorte anzeigenden Steuersignals. Dies bietet die Möglichkeit einer einfachen Steuerung durch manuelle oder automatische Umschaltung zwischen verschiedenen Steuersignalwerten, die jeweils einer Bremsbelagsorte entsprechen. Gemäß einer ersten vorteilhaften Weiterbildung kann das Steuersignal im Einzelnen bspw. im Ansprechen auf eine mit der Verwendung einer neuen Bremsbelagsorte verbundene manuelle, elektrische, elektronische oder elektropneumatische Umschaltung erzeugt werden.

Gemäß einer zweiten vorteilhaften Weiterbildung kann das Steuersignal zur Veränderung der Drucckennlinie sowohl bei einer Schnellbremsung als auch bei einer normalen Betriebsbremsung erzeugt werden, so dass auch die Betriebsbremse bei einem Wechsel der Bremsscheibensorte beeinflusst werden kann.

Gemäß einer dritten vorteilhaften Weiterbildung kann die Kennlinienänderungseinrichtung so ausgestaltet sein, dass die vertikale Verschiebung der Druck-Geschwindigkeit-Kennlinie in einem Druckübersetzer durch Belüften eines zusätzlichen Vorsteuervolumens oder durch Erzeugen einer zusätzlichen Kolbenfläche durch Verbinden zweier Steuerkammern erzielt wird. Das Belüften des zusätzlichen Vorsteuervolumens oder das Erzeugen der zusätzlichen Kolbenfläche kann dabei bspw. durch Ansteuern eines Magnetventils, insbesondere eines Impulsventils, durchgeführt werden. Dies ermöglicht eine technisch einfach realisierbare Kennlinienverschiebung.

Gemäß einer vierten vorteilhaften Weiterbildung kann die Kennlinienänderungseinrichtung so ausgestaltet sein, dass die vertikale Verschiebung der Druck-Geschwindigkeit-Kennlinie in einem Druckübersetzer durch Druckveränderung in einer zweiten Steuerkammer erzielt wird. Dabei kann die Kennlinienänderungseinrichtung bspw. so ausgestaltet sein, dass die Druckveränderung mehrstufig durchgeführt wird.

Im Rahmen dieser Beschreibung können die Kennlinienänderungseinrichtung und die Ermittlungseinrichtung unter Verwendung von Software-Komponenten und/oder Hardware-Komponenten implementiert sein. Sie können eine oder mehrere Schnittstellen aufweisen, um geeignete Daten mit anderen Einrichtungen des Schienenfahrzeugs austauschen zu können, und/oder als ein oder mehrere Module und/oder Prozesse und/oder Objekte und/oder Threads implementiert sein.

Die Erfindung wird nachfolgend anhand von Ausführungsbeispielen unter Bezugnahme auf die beigefügten Zeichnungsfiguren näher erläutert. Es zeigen:
- Fig. 1: ein schematisches Funktionsblockschaltbild einer Bremssteuervorrichtung gemäß einem ersten Ausführungsbeispiel;
- Fig. 2: ein Diagramm mit zwei verschiedenen wählbaren Druck-Geschwindigkeit-Kennlinien gemäß dem ersten Ausführungsbeispiel;
- Fig. 3: eine Schnittansicht eines Druckübersetzers zur Realisation der Kennlinienumschaltung gemäß einem zweiten bis fünften Ausführungsbeispiel; und
- Fig. 4: ein Flussdiagramm eines Steuerverfahrens gemäß einem sechsten Ausführungsbeispiel.

Es folgt eine Beschreibung vorteilhafter Ausführungsbeispiele anhand einer beispielhaften Bremseinrichtung für ein Schienenfahrzeug zur Bereitstellung eines reibwertkompensierten Bremssteuerdrucks für eine pneumatische Bremseinrichtung des Schienenfahrzeugs.

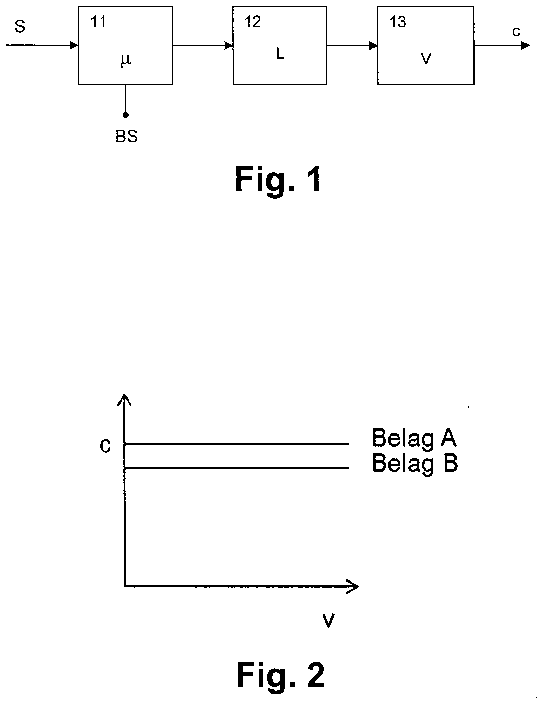

Fig. 1 zeigt ein schematisches Funktionsblockschaltbild einer Bremssteuervorrichtung gemäß einem ersten Ausführungsbeispiel.

Gemäß dem ersten Ausführungsbeispiel ist ein Lastdruckregel-, Begrenzungs-, oder Relaisventil so ausgestaltet, dass unabhängig von der Lastkorrektur (L) des Bremsdrucks c mittels einer entsprechenden Lastkorrektureinheit (L) 12 eine zusätzliche Veränderung (z.B. Verschiebung) der Druckkennlinie bspw. bei der Schnellbremsung durch eine Volumenverstärkung mittels einer Verstärkungseinheit (V) 13 möglich ist, um eine Reibwertänderung durch Wechsel der Bremsbelagsorte zu kompensieren. Hierfür ist zunächst eine Reibwertermittlungs- oder Reinwertanpassungseinheit 11 erforderlich, die einen voreingestellten Sollwert S in Abhängigkeit eines von der verwendeten Bremsbelagsorte abhängigen mittleren Reibwerts kompensiert bzw. mit einbezieht. Dabei kann es sich auch um eine einfache Umschaltung zwischen verschieden belagsortenabhängigen Sollwerten handelt. Hierfür wird bspw. ein die Bremsbelagsorte anzeigendes Steuersignal BS im Ansprechen auf eine manuelle oder automatische Ermittlung des Bremsbelagsorte ermittelt. Da typischer Weise immer nur eine Belagsorte für eine Bremssteuerung im Schienenfahrzeug verbaut ist, kann es ausreichend sein, die Druckkennlinien schaltbar zu gestalten. Die Kennlinienumschaltung durch Verstärkungsänderung in der Verstärkungseinheit 13 im Ansprechen auf das Steuersignal BS kann bspw. manuell, elektrisch, elektronisch, elektropneumatisch durchgeführt werden. In Fig. 1 kann die Reihenfolge der Lastkorrektureinheit 12 und der Verstärkungseinheit 13 auch vertauscht sein.

Die Lastkorrektureinheit 12 kann bspw. derart ausgebildet sein, dass sie ein pneumatisches Lastdrucksignal empfängt, welches einen Lastwert des Schienenfahrzeugs bzw. einer zugeordneten Achse des Schienenfahrzeugs angibt. Dieses Signal kann beispielsweise von einem Luftbalg stammen. Basierend auf dem Lastdrucksignal wird dann der Bremsdruck zur Lastkorrektur verändert.

Optional kann auch vorgesehen sein, die im Ansprechen auf das Steuersignal BS gewählte Kennlinie auch zur Beeinflussung der normalen Betriebsbremse einzusetzen, um dadurch auch eine Reibwertkompensation für den normalen Bremsbetrieb einzuführen. Hierfür kann die gewählte Bremsbelagsorte, der Wert des Steuersignals BS oder eine Schaltstellung für die Kennlinienauswahl auch in die Brems- bzw. Antriebssteuerung der Betriebsbremse eingelesen und zur Steuerung herangezogen werden.

Fig. 2 zeigt ein Diagramm (Bremsdruck (C) über Geschwindigkeit (v)) mit zwei Bremsdruckkennlinien für eine erste Bremsbelagsorte A und eine zweite Bremsbelagsorte B. Wie aus Fig. 2 erkennbar ist, unterscheiden sich die Druckkennlinien durch eine vertikale Verschiebung in Richtung der Achse des Bremsdrucks (auch "c-Druck" genannt). Die erste Belagsorte A benötigt somit einen höheren Bremsdruck, als die zweite Belagsorte B. Zum Ausgleich des veränderten Reibwerts bei einem Wechsel von der Belagsorte B auf die Belagsorte A muss also die Druckkennlinie in vertikaler Richtung nach oben verschoben werden, damit im Betrieb ein höherer Bremsdruck aufgebaut wird. Ein Wechsel der Bremsbelagsorte von A nach B erfordert eine vertikale Verschiebung der Kennlinie nach unten und damit einen niedrigeren Bremsdruck.

Eine solche Kennlinienverschiebung oder -veränderung in der Verstärkungseinheit 13 kann bspw. mittels eines Druckübersetzers (EDU) erzielt werden. Dies kann bspw. so realisiert sein, dass eine zweite Druckkammer mit einem Vorsteuerdruck gefüllt wird, so dass der c-Druck dann sprungartig ansteigt.

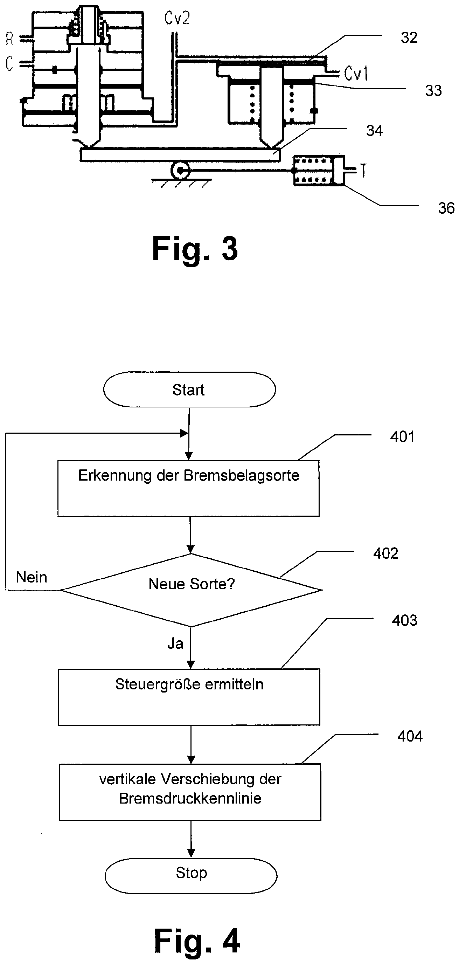

Fig. 3 zeigt eine schematische Schnittansicht eines Druckübersetzers zur Verwendung in einem zweiten bis fünften Ausführungsbeispiel.

Wie eingangs unter Bezugnahme auf Fig. 1 erläutert, soll die Druckkennlinie und damit der Bremsdruck C in Abhängigkeit der ermittelten Belagsorte auf die höhere oder tiefe Stufe (Druckkennlinie) umgeschaltet werden. Im vorliegenden zweiten Ausführungsbeispiel erfolgt die Druckübersetzung in dem Druckübersetzer unter Verwendung zweier verschieden großer Druckteller (auch "Cv-Teller" genannt) 32 und 33, deren Druckkammern über verschiedene Eingänge Cv1 und Cv2 des Druckübersetzers mit dem Bremssteuerdruck Cv beaufschlagt werden können. Über einen mittels pneumatischem Zylinder 36 steuerbaren Wiegebalken 34 kann zusätzlich eine lastabhängige Umstellung in Abhängigkeit des vorgenannten Lastwerts erfolgen.

Gemäß dem vorliegenden Ausführungsbeispiel wird bei einer Notbremsung zuerst der Eingang der Cv1-Kammer des Druckübersetzers 26 mit dem Steuerdruck Cv beaufschlagt, welche wegen der kleineren Drucktellergröße eine geringere Kraft ausübt und somit den kleineren Bremsdruck C erzeugt. Wird bei einem Bremsbelagwechsel (z.B. von Belagsorte B auf Belagsorte A in Fig. 2) ein erhöhter Bremsdruck C benötigt, so wird dies durch Beaufschlagung der Cv2-Kammer mit dem Steuerdruck über den zweiten Eingang Cv2 erreicht. Der Druckteller der Cv2-Kammer hat eine größere Fläche und die Differenzkraft addiert sich zu der Gesamtkraft, was einen höheren Bremsdruck C und damit eine Verschiebung der Druckkennlinie in vertikaler Richtung nach oben in Fig. 2 zur Folge hat.

Gemäß dem zweiten Ausführungsbeispiel kann die vertikale Verschiebung der Bremsdruckkennlinie somit durch Belüften eines zusätzlichen Vorsteuervolumens oder einer zusätzlichen Kolbenfläche oder durch Verbinden mit einer zweiter Steuerkammern mittels manueller Umschaltung erfolgen. Eine Rückmeldung zur Bremssteuerung (Bremssteuergerät) kann mittels Stellungsüberwachung und Rücklesen des Status erfolgen.

Gemäß dem dritten Ausführungsbeispiel kann die Umschaltung bei neuer Belagsorte auch automatisch mittels Magnetventil und Ansteuerung durch das Bremssteuergerät erfolgen, vorzugsweise mittels Impulsventil zum Erhalt der Stellung im stromlosen Zustand.

Gemäß dem vierten Ausführungsbeispiel kann eine individuelle Kennlinienverschiebung auch durch eine analoge Veränderung des Bremssteuerdruckes in der zweiten Steuerkammer erreicht werden. Dies kann mittels eines elektronischen Regelkreises implementiert werden. Dabei kann eine Membran oder ein Druckteller mit einen analogen Druck beaufschlagt werden, der dann die untere Kennlinie während der Bremsung beeinflusst. So kann bspw. eine feste Untergrenze von 2 bar vorgesehen sein, wobei dann eine gerade oder variable Kennlinie nach Bedarf hinzugefügt werden kann.

Gemäß dem fünften Ausführungsbeispiel kann auch eine mehrfach gestufte Kennlinienverschiebung zur Anpassung an mehrere Belagsorten durch gestufte Veränderung des Druckes in der zweiten Steuerkammer erreicht werden. Dies kann ähnlich dem vierten Ausführungsbeispiel realisiert werden, wobei die Schwelle hier während des Bremsvorgangs geändert wird, um neben unterschiedliche Belägen auch eine Kompensation des Verhaltens des Belags zu ermöglichen.

Fig. 4 zeigt ein Flussdiagramm eines Steuerverfahrens für eine Bremseinrichtung mit Reibwertkompensation gemäß einem sechsten Ausführungsbeispiel, das beispielsweise in einer Bremssteuereinrichtung als Software zur Computersteuerung implementiert werden kann.

Der Programmstart wird bspw. beim oder nach einem Wechsel eines Bremsbelags eingeleitet. Im Schritt 401 erfolgt zunächst die Erkennung der Bremsbelagsorte und des damit verbundenen Reibwerts. Dies kann bspw. durch manuelle Eingabe oder Einscannen einer Identifikation oder Kennung der Bremsbelagsorte oder durch sonstige optische oder transpondergebundene Erkennung erfolgen. Danach wird im Schritt 402 durch Vergleich mit der zuletzt genutzten Bremsbelagsorte geprüft, ob eine neue Bremsbelagsorte installiert wurde. Falls nicht, werden die Schritte 401 und 402 beim nächsten Belagswechsel wiederholt. Alternativ kann zum Ende des Ablaufs gesprungen werden. Wird dagegen im Schritt 402 festgestellt, dass eine neue Belagsorte installiert wurde, schreitet der Ablauf zum Schritt 403 und eine Steuergröße für die Verschiebung der Bremsdruckkennlinie wird basierend auf dem veränderten Reibwert der neuen Bremsbelagsorte ermittelt. Die entsprechenden Parameterwerte können in einer programmierbaren oder austauschbaren Speichertabelle vorgehalten werden. Der Schritt 403 kann auch die Erzeugung des die Belagsorte anzeigenden Steuersignals BS umfassen. Schließlich wird im Schritt 404 die Verschiebung der Bremsdruckkennlinie gemäß der ermittelten Steuergröße durch Einleitung entsprechender Steuerungsmaßnahmen bspw. für den Druckübersetzer veranlasst. Danach ist der Ablauf beendet.

Es sei angemerkt, dass die vorgeschlagene Veränderung der Bremsdruckkennlinie nicht zwingend als eine vertikale Verschiebung realisiert werden muss. Je nach Reibcharakteristik der neuen Bremsbelagsorte können auch andere Änderungen mit veränderter Kennliniensteigung oder -form durch entsprechende Beeinflussung des Drückübersetzers oder des zugeführten Steuerdrucks realisiert werden, um eine geeignete Reibwertkompensation zu erreichen.

Zusammenfassend wurden eine Vorrichtung und ein Verfahren zur Steuerung einer Bremseinrichtung eines Schienenfahrzeugs beschrieben, wobei mittels einer Kennlinienänderungseinrichtung eine Druckkennlinie der Bremseinrichtung in Abhängigkeit einer Reibcharakteristik einer in der Bremseinrichtung verwendeten Bremsbelagsorte verändert wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Vorrichtung zur Steuerung einer Bremseinrichtung eines Schienenfahrzeugs, mit einer Kennlinienänderungseinrichtung (13; 404) zum Verändern einer Druckkennlinie der Bremseinrichtung in Abhängigkeit einer Reibcharakteristik einer in der Bremseinrichtung verwendeten Bremsbelagsorte, und mit einer Ermittlungseinrichtung (11; 403) zum Ermitteln der Reibcharakteristik anhand eines die gewählte Bremsbelagsorte anzeigenden Steuersignals (BS).

2. Vorrichtung nach Anspruch 1, wobei die Vorrichtung ausgestaltet ist, das Steuersignal (BS) im Ansprechen auf eine mit der Verwendung einer neuen Bremsbelagsorte verbundene manuelle, elektrische, elektronische oder elektropneumatische Umschaltung zu erzeugen.

3. Vorrichtung nach Anspruch 1 oder 2, wobei die Vorrichtung ausgestaltet ist, das Steuersignal (BS) zur Veränderung der Druckkennlinie sowohl bei einer Schnellbremsung als auch bei einer normalen Betriebsbremsung zu erzeugen.

4. Vorrichtung nach einem der vorgenannten Ansprüche, wobei die Kennlinienänderungseinrichtung (13; 404) ausgestaltet ist, eine vertikale Verschiebung der Druck-Geschwindigkeit-Kennlinie längs der Druckachse hervorzurufen.

5. Vorrichtung nach Anspruch 4, wobei die Kennlinienänderungseinrichtung (13; 404) ausgestaltet ist, die vertikale Verschiebung der Druck-Geschwindigkeit-Kennlinie in einem Druckübersetzer durch Belüften eines zusätzlichen Vorsteuervolumens oder durch Erzeugen einer zusätzlichen Kolbenfläche durch Verbinden zweier Steuerkammern hervorzurufen.

6. Vorrichtung nach Anspruch 5, wobei die Kennlinienänderungseinrichtung (13; 404) ausgestaltet ist, das Belüften des zusätzlichen Vorsteuervolumens oder das Erzeugen der zusätzlichen Kolbenfläche durch Ansteuern eines Magnetventils, insbesondere eines Impulsventils, durchzuführen.

7. Vorrichtung nach Anspruch 4, wobei die Kennlinienänderungseinrichtung (13; 404) ausgestaltet ist, die vertikale Verschiebung der Druck-Geschwindigkeit-Kennlinie in einem Druckübersetzer durch Druckveränderung in einer zweiten Steuerkammer hervorzurufen.

8. Vorrichtung nach Anspruch 7, wobei die Kennlinienänderungseinrichtung (13; 404) ausgestaltet ist, die Druckveränderung mehrstufig durchzuführen.

9. Bremsanlage für ein Schienenfahrzeug, mit einer Vorrichtung nach einem der Ansprüche 1 bis 8.

10. Verfahren zur Steuerung einer Bremseinrichtung eines Schienenfahrzeugs, mit dem Schritt des Veränderns (404) einer Druckkennlinie der Bremseinrichtung in Abhängigkeit einer Reibcharakteristik einer in der Bremseinrichtung verwendeten Bremsbelagsorte, und mit dem Schritt des Ermittelns (403) der Reibcharakteristik anhand eines die gewählte Bremsbelagsorte anzeigenden Steuersignals (BS).

11. Verfahren nach Anspruch 10, wobei der Bremsvorgang eine Schnellbremsung ist.

12. Computerprogramm mit Codemitteln zum Generieren der Schritte gemäß Patentanspruch 10 bei dessen Ausführung in einem Computersystem.

## Claims

1. Apparatus for controlling a brake device of a rail vehicle, having a characteristic curve changing device (13; 404) for varying a pressure characteristic curve of the brake device in a manner dependent on a friction characteristic of a brake pad type used in the brake device, and having a determining device (11; 403) for determining the friction characteristic on the basis of a control signal (BS) which indicates the selected brake pad type.

2. Apparatus according to claim 1, wherein the apparatus is designed to generate the control signal (BS) in response to a manual, electrical, electronic or electropneumatic switchover associated to the use of a new brake pad type.

3. Apparatus according to claim 1 or 2, wherein the apparatus is designed to generate the control signal (BS) for the variation of the pressure characteristic curve both in the case of a rapid braking operation and in the case of a normal service braking operation.

4. Apparatus according to any of the preceding claims, wherein the characteristic curve changing device (13; 404) is designed to effect a vertical shift of the pressure-speed characteristic curve along the pressure axis.

5. Apparatus according to claim 4, wherein the characteristic curve changing device (13; 404) is designed to effect the vertical shift of the pressure-speed characteristic curve in a pressure transmitter by aerating an additional pilot-control volume or by generating an additional piston area by connecting two control chambers.

6. Apparatus according to claim 5, wherein the characteristic curve changing device (13; 404) is designed to perform the aeration of the additional pilot-control volume or the generation of the additional piston area by actuating a solenoid valve, in particular an impulse valve.

7. Apparatus according to claim 4, wherein the characteristic curve changing device (13; 404) is designed to effect the vertical shift of the pressure-speed characteristic curve in a pressure transmitter by pressure variation in a second control chamber.

8. Apparatus according to claim 7, wherein the characteristic curve changing device (13; 404) is designed to perform the pressure variation in multi-stage fashion.

9. Brake system for a rail vehicle, having an apparatus according in any of claims 1 to 8.

10. Method for controlling a brake device of a rail vehicle, having the step of varying (404) a pressure characteristic curve of the brake device in a manner dependent on a friction characteristic of a brake pad type used in the brake device, and having the step of determining (403) the friction characteristic on the basis of a control signal (BS) which indicates the selected brake pad type.

11. Method according to claim 1, wherein the braking process is a rapid braking operation.

12. Computer programme having code means for generating the steps according to patent claim 10 when said computer programme is executed in a computer system.

## Revendications

1. Système de commande d'un dispositif de freinage d'un véhicule ferroviaire, ayant un dispositif (13 ; 404) de modification de courbe caractéristique pour modifier une courbe caractéristique de pression du dispositif de frein, en fonction d'une caractéristique de frottement d'un type de garniture de frein utilisé dans le dispositif de frein, et ayant un dispositif (11 ; 403) de détermination pour déterminer la caractéristique de frottement à l'aide d'un signal (BS) de commande indiquant le type de garniture de frein choisi.

2. Système suivant la revendication 1, dans lequel le système est conformé pour produire le signal (BS) de commande, en réaction à une commutation manuelle électrique, électronique ou électropneumatique, reliée à l'utilisation d'un nouveau type de garniture de frein.

3. Système suivant la revendication 1 ou 2, dans lequel le système est conformé pour produire le signal (BS) de commande pour modifier la courbe caractéristique de pression, à la fois lors d'un freinage rapide et lors d'un freinage de service normal.

4. Système suivant l'une des revendications précédentes, dans lequel le dispositif (13 ; 404) de modification de la courbe caractéristique est conformé pour provoquer un décalage vertical de la courbe caractéristique pression-vitesse le long de l'axe des pressions.

5. Système suivant la revendication 4, dans lequel le dispositif (13 ; 404) de modification de courbe caractéristique est conformé pour provoquer le décalage vertical de la courbe caractéristique pression-vitesse dans un multiplicateur de pression, par alimentation en air d'un volume pilote supplémentaire ou par production d'une surface de piston supplémentaire par liaison de deux chambres de commande.

6. Système suivant la revendication 5, dans lequel le dispositif (13 ; 404) de modification de courbe caractéristique est conformé pour effectuer l'alimentation en air du volume pilote supplémentaire ou la production de la surface de piston supplémentaire par commande d'une électrovanne, notamment d'une vanne à impulsions.

7. Système suivant la revendication 4, dans lequel le dispositif (13 ; 404) de modification de courbe caractéristique est conformé pour provoquer le décalage vertical de la courbe caractéristique pression-vitesse dans un multiplicateur de pression, par variation de la pression dans une deuxième chambre de commande.

8. Système suivant la revendication 7, dans lequel le dispositif (13 ; 404) de modification de courbe caractéristique est conformé pour effectuer la modification de pression en plusieurs paliers.

9. Installation de frein d'un véhicule ferroviaire ayant un système suivant l'une des revendications 1 à 8.

10. Procédé de commande d'un dispositif de frein d'un véhicule ferroviaire, comprenant le stade de la modification (404) d'une courbe caractéristique de pression du dispositif de frein, en fonction d'une caractéristique de frottement d'un type de garniture de frein utilisé dans le dispositif de frein, et comprenant le stade de la détermination (403) de la caractéristique de frottement, à l'aide d'un signal (BS) de commande indiquant le type de garniture de frein choisi.

11. Procédé suivant la revendication 10, dans lequel l'opération de freinage est un freinage rapide.

12. Programme d'ordinateur ayant des moyens de code pour produire les stades suivant la revendication 10 lors de son exécution dans un système d'ordinateur.
